Europäisches Patentamt

European Patent Office

Office européen des brevets

(11) Veröffentlichungsnummer: **0 214 624**
**B1**

# EUROPÄISCHE PATENTSCHRIFT

(45) Veröffentlichungstag der Patentschrift:
05.09.90

(21) Anmeldenummer: 86112289.3

(22) Anmeldetag: 05.09.86

(51) Int. Cl.⁵: **B23D 37/14**

(54) Vorrichtung zum Räumen einer zylindrischen Fläche eines Werkstückes, vorzugsweise von Lagerzapfen, insbesondere einer Kurbelwelle.

(30) Priorität: 12.09.85 DE 3532538

(43) Veröffentlichungstag der Anmeldung:
18.03.87 Patentblatt 87/12

(45) Bekanntmachung des Hinweises auf die Patenterteilung:
05.09.90 Patentblatt 90/36

(84) Benannte Vertragsstaaten:
AT CH DE FR GB IT LI

(56) Entgegenhaltungen:
EP-A- 0 091 697
AT-B- 315 606
AT-B- 343 433
DE-A- 1 800 065
DE-A- 3 001 334

(73) Patentinhaber: Gebr. Heller Maschinenfabrik GmbH,
Postfach 1428 Neuffener Strasse 54,
D-7440 Nürtingen(DE)

(72) Erfinder: Schmid, Karl-Heinz, In den Burggärten 31,
D-7440 Nürtingen-Oberensingen(DE)

(74) Vertreter: Kohl, Karl-Heinz et al, Patentanwälte
Dipl.-Ing. A.K. Jackisch-Kohl Dipl.-Ing. K.H. Kohl
Stuttgarter Strasse 115, D-7000 Stuttgart 30(DE)

## Beschreibung

Die Vorrichtung betrifft eine Vorrichtung zum Räumen von zylindrischen Flächen eines Werkstückes nach dem Oberbegriff des Anspruches 1.

Bei dieser bekannten Vorrichtung (DE-OS 18 00 065) werden das zu bearbeitende Werkstück und das Räumwerkzeug während der Bearbeitung jeweils um ihre Achse gedreht. Die Drehung des Werkstückes bestimmt hierbei die Schnittgeschwindigkeit. Um zerspanungstechnisch optimale Schnittgeschwindigkeiten zu erhalten, müßte das Werkstück bei der Bearbeitung mit einer verhältnismäßig hohen Drehzahl gedreht werden, wodurch sich aber große Unwuchten ergeben, insbesondere wenn die Hublager einer Kurbelwelle bearbeitet werden. Mit dieser Vorrichtung können darum derartige Werkstücke nicht optimal bearbeitet werden.

Bei einer anderen bekannten Vorrichtung (DE-OS 33 40 830) wird das Werkstück, beispielsweise eine Kurbelwelle, während der Bearbeitung mittels der Spanneinrichtung ebenfalls gedreht. Die Räumwerkzeuge werden mittels des Werkzeugträgers an der mit Bearbeitungsschnittgeschwindigkeit sich drehenden Kurbelwelle linear vorbeigeschoben. Um die Zustellbewegung zu erzielen, sind die Schneidteile des Räumwerkzeuges entgegen Vorschubrichtung des Werkzeugträgers bzw. des Räumwerkzeuges ansteigend hintereinander angeordnet. Auch hier wird die Kurbelwelle während der Bearbeitung mit einer verhältnismäßig hohen Drehzahl gedreht, wodurch sich große Unwuchten ergeben, insbesondere wenn die Hublager der Kurbelwelle bearbeitet werden. Aus diesem Grunde kann die zerspanungstechnisch optimale Schnittgeschwindigkeit auch bei dieser Vorrichtung nicht ausgenutzt werden.

Der Erfindung liegt die Aufgabe zugrunde, die gattungsgemäße Vorrichtung zum Räumen von zylindrischen Flächen eines Werkstückes so auszubilden, daß bei der Bearbeitung des Werkstückes keine Rücksicht auf dessen Unwuchten genommen werden muß und bei einfacher und kompakter Ausbildung hohe Schnittgeschwindigkeiten bei langen Werkzeugstandzeiten bei der Bearbeitung der Werkstücke erzielt werden. Hierbei soll auch die Bearbeitungszeit verkürzt werden.

Diese Aufgabe wird bei der gattungsgemäßen Vorrichtung erfindungsgemäß mit den kennzeichnenden Merkmalen des Anspruches 1 gelöst.

Bei der erfindungsgemäßen Vorrichtung wird das zu bearbeitende Werkstück in der Spanneinrichtung fest eingespannt und steht während des Räumens still. Zum Räumen wird der Werkzeugträger um seine Achse gedreht, die gleichzeitig der Achse der zu bearbeitenden zylindrischen Fläche des Werkstückes entspricht. Das am Werkzeugträger angeordnete Räumwerkzeug wird bei dieser Drehbewegung des Werkzeugträgers mitgenommen und läuft somit um die Achse des Werkzeugträgers um. Diese Umlaufbewegung des Räumwerkzeuges bzw. die Drehbewegung des Werkzeugträgers bestimmt die Schnittgeschwindigkeit. Sie kann sehr hoch sein, weil auf die Unwuchten des zu bearbeitenden, still stehenden Werkstückes keine Rücksicht genommen werden muß. Während dieser Umlaufbewegung wird das Räumwerkzeug gleichzeitig um seine eigene Achse gedreht. Durch diese der Umlaufbewegung überlagerte Drehbewegung des Räumwerkzeuges wird der Vorschub beim Räumen der zylindrischen Fläche des Werkstückes bestimmt. Infolge dieser Drehbewegungen von Werkzeugträger und Räumwerkzeug kann die Vorrichtung kompakt ausgebildet werden. Das Räumwerkzeug kann klein und gewichtsmäßig leicht gebaut werden, so daß es sich besonders für einen automatischen Werkzeugwechsel eignet. Da das Räumwerkzeug um seine Achse gedreht wird, können die Schneidteile des Räumwerkzeuges so ausgebildet werden, daß die am Ende des Räumens mit der zylindrischen Fläche des Werkstückes in Eingriff kommenden Schneidteile das am Werkstück herzustellende Profil aufweisen. Außerdem können die letzten Schneiden als Schlichtschneiden ausgebildet werden, so daß die zylindrische Fläche so weit fertig bearbeitet werden kann, daß nur noch eine Feinbearbeitung, wie Schleifen und dergleichen, erfolgen muß.

Weitere Merkmale der Erfindung ergeben sich aus den weiteren Ansprüchen, der Beschreibung und den Zeichnungen.

Die Erfindung wird anhand einiger in den Zeichnungen dargestellter Ausführungsformen näher erläutert. Es zeigen

Fig. 1 in schematischer Darstellung eine erste Ausführungsform einer erfindungsgemäßen Vorrichtung teilweise im Längsschnitt und teilweise in Seitenansicht,

Fig. 2 teilweise in Ansicht und teilweise im Schnitt längs der Linie II-II in Fig. 1 eine Stirnansicht der erfindungsgemäßen Vorrichtung gemäß Fig. 1,

Fig. 3 einen Schnitt längs der Linie III-III in Fig. 1,

Fig. 4 in Seitenansicht eine zweite Ausführungsform einer erfindungsgemäßen Vorrichtung mit der die Haupt- und Hublager einer Kurbelwelle für eine zwei- und vierzylindrige Maschine bearbeitet werden können,

Fig. 5 eine Ansicht längs der Linie V-V in Fig. 4,

Fig. 6 in Seitenansicht eine dritte Ausführungsform einer erfindungsgemäßen Vorrichtung, mit der nur die Hauptlager einer Kurbelwelle bearbeitet werden können,

Fig. 7 eine Ansicht längs der Linie VII-VII in Fig. 6.

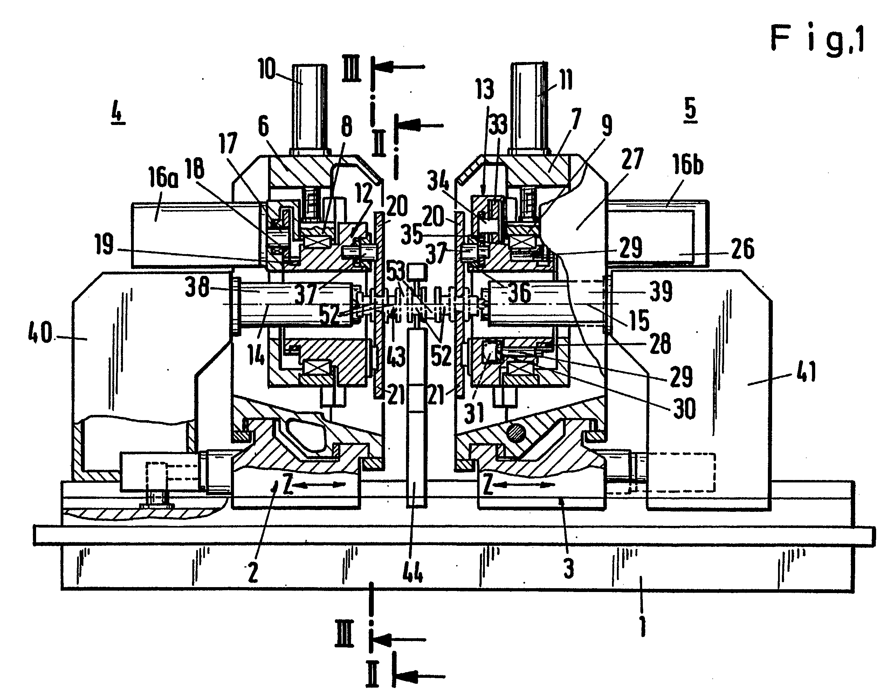

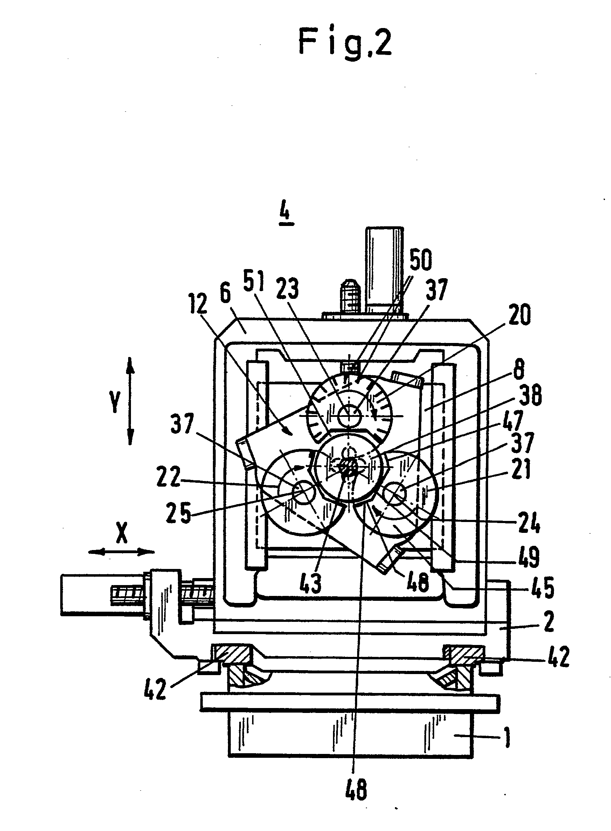

Die Vorrichtung nach den Fig. 1 bis 3 dient zum Bearbeiten der Haupt- und Hublager von Kurbelwellen. Die Vorrichtung hat ein Bett 1, auf dem zwei Kreuzschlitten 2, 3 zweier Bearbeitungseinheiten 4 und 5 in Z-Richtung verfahrbar sind. Die Kreuzschlitten 2, 3 tragen jeweils einen Ständer 6, 7, der auf dem Kreuzschlitten in X-Richtung (Fig. 2) verstellt werden kann. Jeder Ständer 6, 7 trägt einen Schlitten 8, 9, der mittels eines Antriebes 10, 11 in Y-Richtung verstellt werden kann. Somit können die Schlitten 8, 9 in den drei zueinander senkrechten Richtungen in jede gewünschte Lage eingestellt werden.

Die Schlitten 8, 9 tragen jeweils einen Werkzeugträger 12, 13, der um eine in Z-Richtung liegende Achse 14, 15 drehbar angetrieben ist, die in der Darstellung gemäß Fig. 1 mit der Hauptlagerachse der zu bearbeitenden Kurbelwelle 43 zusammenfällt. Zum Drehantrieb der Werkzeugträger 12, 13 ist am Schlitten 8, 9 ein Antriebsmotor 16a, 16b vorgesehen. Auf seiner Antriebswelle 17 sitzt ein Zahnrad 18, das in eine umlaufende Verzahnung 19 der Werkzeugträger 12, 13 eingreift. Somit werden über die Motoren 16a, 16b die Werkzeugträger 12, 13 um die Achsen 14, 15 rotierend angetrieben.

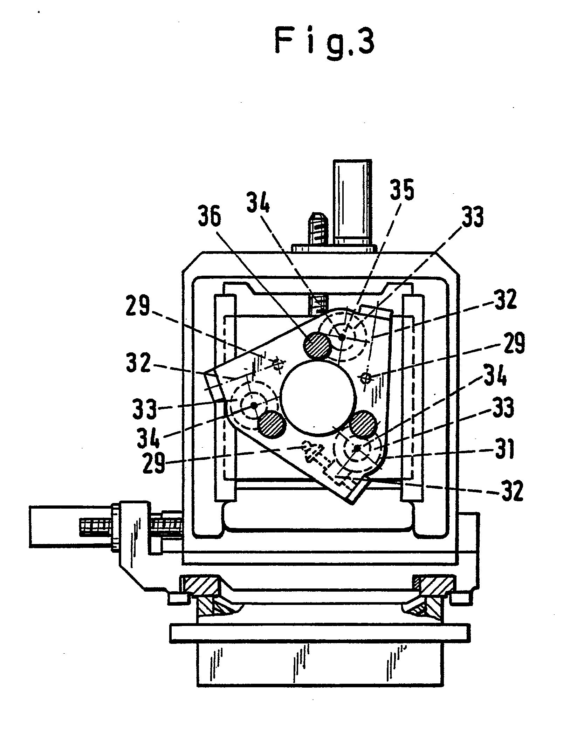

Auf dem Werkzeugträger 12, 13 sind über den Umfang verteilt drei Räumwerkzeuge 20 bis 22 vorgesehen (Fig. 2), die jeweils um Achsen 23 bis 25 rotierend angetrieben werden. Zum Antrieb der Räumwerkzeuge 20 bis 22 ist an jedem Schlitten 8, 9 ein Antrieb 26 angeordnet, von denen in Fig. 1 lediglich der Antrieb 26 für die Bearbeitungseinheit 5 dargestellt ist. Die andere Bearbeitungseinheit 4 weist in gleicher Weise einen solchen Antrieb auf. Seine Antriebswelle wirkt mit einem an sich bekannten Überlagerungsgetriebe 27 zusammen. Der Drehbewegung des Werkzeugträgers 12, 13 wird somit über den Antrieb 26 eine zusätzliche Drehbewegung der Räumwerkzeuge 20 bis 22 überlagert, die somit außer ihrer Umlaufbewegung um die Achsen 14, 15 noch Drehbewegungen um ihre eigenen Achsen 23 bis 25 ausführen. Durch das Überlagerungsgetriebe 27 wird ein in einer Ringnut des Werkzeugträgers 12, 13 liegender Zahnring 28 (Fig. 1) drehbar angetrieben. Er dreht somit relativ zum Werkzeugträger 12, 13. In den in bezug auf den Werkzeugträger 12, 13 frei drehbaren Zahnring 28 greifen drei Zwischenwellen 29 ein, die den drei Räumwerkzeugen 20 bis 22 zugeordnet sind (Fig. 1 und 3). Die Zwischenwellen 29 sind jeweils über ein Kegelradgetriebe 30,31 (Fig.1 und 3) mit einer Schnecke 32 antriebsverbunden, die drehbar im Werkzeugträger 12, 13 gelagert ist. In Fig. 3 sind zwei der drei Schnecken 32 lediglich durch ihre Achsen gekennzeichnet. Die Schnecken 32 kämmen mit jeweils einem Schneckenrad 33, dessen Welle 34 über ein Zahnradgetriebe 35, 36 mit den Wellen 37 der Räumwerkzeuge 20 bis 22 antriebsverbunden sind. Die Schneckengetriebe 32, 33, die Wellen 34 und 37 sowie die Zahnradgetriebe 35, 36 sind in den Werkzeugträgern 12, 13 drehbar gelagert.

Die Werkzeugträger 12, 13 sind als Hohlträger ausgebildet und von einem Spannfutter 38, 39 eines Spannstockes 40, 41 durchsetzt. Er ist ebenso wie der Kreuzschlitten 2, 3 auf einer in Z-Richtung verlaufenden Führung 42 des Bettes 1 verstellbar (Fig. 2). In den beiden Spannfutter 38, 39 der Bearbeitungseinheiten 4, 5 weden die Enden der zu bearbeitenden Kurbelwelle 43 (Fig. 1) eingespannt. Die Spannstöcke 40,41 sind unabhängig von den Kreuzschlitten 2, 3 verstellbar. Die Verstellbarkeit der Spannstöcke 40, 41 ist notwendig, um kürzere oder längere Werkstücke spannen zu können.

Die Räumwerkzeuge 20 bis 22 haben jeweils einen scheibenförmigen Schneidteilträger 45, der mit einer Aussparung 46 versehen ist (Fig. 2). Sie wird durch annähernd radial verlaufende Seitenwände 47,48 und einen sie verbindenden Boden 49 begrenzt, der parallel zu einer Axialebene des Schneidteilträgers verläuft. Die Seitenwände 47, 48 verlaufen bis zum Umfang des Schneidteilträgers 45. Im Bereich zwischen den Seitenwänden 47, 48 sitzen am Umfang des Schneidteilträgers 45 die nicht näher dargestellten Räummesser 50. Die Schneiden der in Umfangsrichtung hintereinander angeordneten Räummesser 50 liegen auf einer in Drehrichtung des Räumwerkzeuges 20 bis 22 ansteigenden Spirale.

Mit der Vorrichtung nach den Fig. 1 bis 3 können Kurbelwellen für ein- und mehrzylindrige Maschinen bearbeitet werden. In der Ausgangslage nehmen die Schneidteilträger 45 der Räumwerkzeuge 20 bis 22 die in Fig. 2 dargestellte gegenseitige Lage ein. In ihr sind die Aussparungen 46 so angeordnet, daß sie eine zentrale Öffnung 51 für den Durchtritt der Kurbelwelle 43 begrenzen. Zum Einspannen der zu bearbeitenden Kurbelwelle 43 werden die Räumwerkzeuge 20 bis 22 mittels der Kreuzschlitten 2, 3 und der Ständer 6, 7 auseinandergefahren. Die Spannfutter 38, 39 können hierbei durch die zentralen Öffnungen 51 der beiden Bearbeitungseinheiten 4, 5 hindurchtreten. Die Kurbelwelle 43 läßt sich dann bequem in den Spannfuttern 38, 39 einspannen. Außerdem wird die Kurbelwelle 43 mit der zwischen den beiden Bearbeitungseinheiten 4, 5 liegenden Spannvorrichtung 44 mittig eingespannt. Anschließend werden die Bearbeitungseinheiten 4, 5 mittels der Kreuzschlitten 2, 3 wieder so weit zugestellt, bis die Räumwerkzeuge 20 bis 22 in den Bearbeitungsbereich der Kurbelwelle 43 gelangen. Die Ausrichtung der Räumwerkzeug 20 bis 22 relativ zu den zu bearbeitenden Haupt- und Hublagern der Kurbelwelle 43 läßt sich durch die beschriebene Verstellmöglichkeit in X-Y- und Z-Richtung einfach vornehmen. Im Ausführungsbeispiel hat die Kurbelwelle 43 vier Hublager 52 und zwischen ihnen liegende Hauptlager 53. Bei der Stellung gemäß Fig. 1 bearbeiten die Räumwerkzeuge 20 bis 22 das erste und das letzte Hauptlager 52 der Kurbelwelle 43. Da die Räumwerkzeuge 20 bis 22 der beiden Bearbeitungseinheiten jeweils in gleicher Ebene liegen, bearbeiten sämtliche Räumwerkzeuge jeder Bearbeitungseinheit das gleiche Hauptlager 52. Nach Fertigbearbeitung des Hauptlagers werden die Schlitten 8, 9 und die Ständer 6, 7 gegebenenfalls in die Grundstellung gemäß Fig. 2 gefahren, so daß die Ständer 6, 7 mit den Räumwerkzeugen 20 bis 22 zum nächsten zu bearbeitenden Lager verfahren werden können, das dann in gleicher Weise bearbeitet wird. Beim Verfahren des Schlittens 8, 9 nehmen die Schneidteilträger 45 der Räumwerkzeuge 20 bis 22 wiederum ihre in Fig. 2 dargestellte gegenseitige Lage ein. Auf diese Weise können nacheinander die verschiedenen Lager der Kurbelwelle 43 bearbeitet werden. Falls notwendig, wird die Spannvorrichtung 44 ebenfalls verstellt, so daß die Kurbelwelle 43 an einer anderen Stelle während der Bearbeitung zwischen ihren Enden abgestützt wird.

Während der Bearbeitung ist die Kurbelwelle 43 fest, dreht also nicht um ihre jeweilige Achse. Bei der Bearbeitung werden die Werkzeugträger 12, 13 um ihre Achsen 14, 15 mittels der Motoren 16a, 16b drehbar angetrieben. Hierdurch laufen die Räumwerkzeuge 20 bis 22 um diese Drehachsen 14, 15 um. Dieser Umlauf der Räumwerkzeuge 20 bis 22 bzw. die Drehung der Werkzeugträger 12, 13 bestimmt die Schnittgeschwindigkeit. Bei ihrem Umlauf werden die Räumwerkzeuge 20 bis 22 außerdem um ihre Achsen 23 bis 25 mittels der Antriebe 26 gedreht. Durch diese der Umlaufbewegung überlagerte Drehbewegung der Räumwerkzeuge 20 bis 22 wird deren Vorschub bestimmt. Da die Kurbelwelle 43 während der Bearbeitung fest eingespannt ist und stillsteht, wird die Schnittgeschwindigkeit nicht durch Unwuchten der Kurbelwelle 43 begrenzt. Dadurch können sehr hohe Schnittgeschwindigkeiten erzielt werden, so daß eine rasche Bearbei tung der Kurbelwelle möglich ist. Da mehrere gleichartige Werkzeuge 20 bis 22 zum Einsatz kommen, wird eine sehr hohe Abtragleistung erzielt. Insbesondere werden die Spanlängen in vorteilhafter Weise kleiner. Infolge der drei am Umfang gleichmäßig verteilt auf die Kurbelwelle 43 eingreifenden Räumwerkzeuge 20 bis 22 werden die Durchbiegungskräfte an der Kurbelwelle gegenseitig aufgehoben. Infolge der Kreuzschlittenbauweise der Vorrichtung in X- und Y-Achse kann jede Kurbelwellenart in derselben Aufspannung bearbeitet werden, da die Drehachse 14, 15 der Werkzeugträger auf jede Achse der Kurbelwellenzapfen eingestellt werden kann. Da die Schneidteilträger 45 der Räumwerkzeuge 20 bis 22 mit den segmentartigen Aussparungen 46 versehen sind, müssen die Räumwerkzeuge 20 bis 22 nach der jeweiligen Bearbeitung nicht zurückgestellt werden, so daß sich sehr kurze Nebenzeiten ergeben. Es können sehr kleine und leichte Räumwerkzeuge verwendet werden, die kostengünstig sind und einen automatischen Werkzeugwechsel in einfacher Weise ermöglichen. Außerdem kann durch eine entsprechende Abstimmung des Eingriffes der Schneidteile der Räumwerkzeuge 20 bis 22 eine Addition der Zerspanleistung vermieden werden. Da die Werkzeugträger 12, 13 als Hohlträger ausgebildet sind, in welche die Spannfutter 38, 39 eingreifen können, wird die kompakte Ausbildung der Vorrichtung noch erhöht. Das Getriebe zwischen dem Antrieb 26 und den Räumwerkzeugen 20 bis 22 ist ebenfalls raumsparend im Werkzeugträger 12, 13 untergebracht.

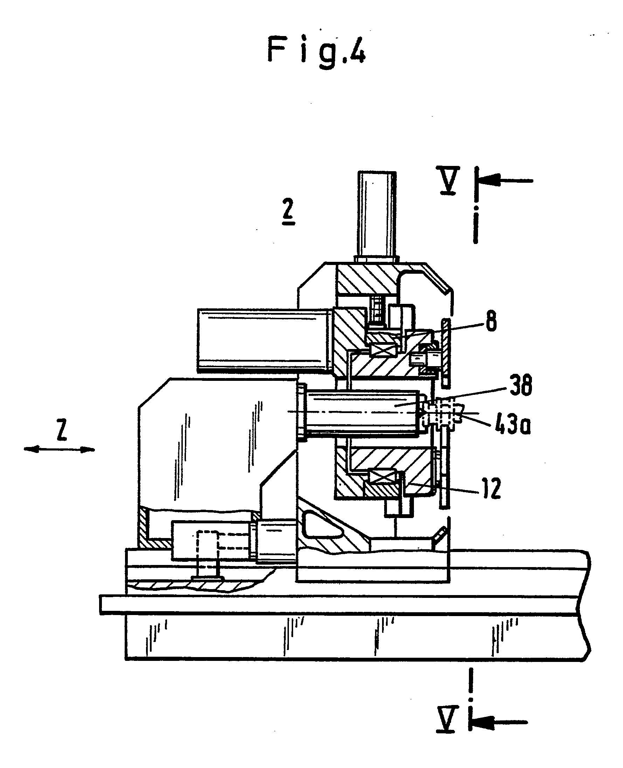

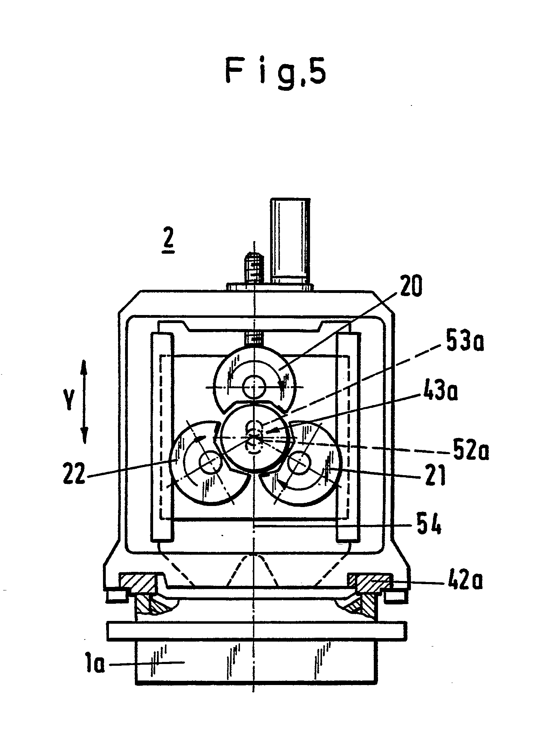

Mit der Ausführungsform gemäß den Fig. 4 und 5 können die Kurbelwellen von zwei- und vierzylindrigen Maschinen bearbeitet werden. Bei diesen Kurbelwellen 43a liegen die Achsen der Hublager 53a und der Hauptlager 52a in einer gemeinsamen Ebene 54. Darum kann die Kurbelwelle 43a so in den Spannfuttern 38, 39 eingespannt werden, daß die Achsen dieser Lager 52a, 53a in einer gemeinsamen Vertikalebene liegen (Fig. 5). Dadurch kann die Verstellmöglichkeit in X-Richtung der Schlitten 8, 9 entfallen. Die Ständer 6, 7 sind direkt auf den Führungen 42a (Fig. 5) des Bettes 1a in Z-Richtung verschiebbar. Im übrigen ist diese Vorrichtung gleich ausgebildet wie das Ausführungsbeispiel gemäß den Fig. 1 bis 3. In Fig. 4 ist nur die eine der beiden Bearbeitungseinheiten dargestellt.

Zur Bearbeitung der Kurbelwelle 43a, die in den beiden Spannfuttern 38, 39 mit ihren Enden eingespannt und gegebenenfalls mit der (nicht dargestellten) Spannvorrichtung 44 mittig abgestützt wird, werden nacheinander die Hub- und Hauptlager 52a, 53a der Kurbelwelle bearbeitet. Durch Verschieben der Bearbeitungseinheit 2, 3 in Z-Richtung und Verstellen der Schlitten 8, 9 in Y-Richtung werden die Räumwerkzeuge 20 bis 22 genau gegenüber den zu bearbeitenden Lagern der Kurbelwelle 43a ausgerichtet. Durch Drehen der Werkzeugträger 12, 13 um ihre Achsen und gleichzeitiger Drehung der Räumwerkzeuge 20 bis 22 um ihre eigene Achse wird ihre Umlaufbewegung der Drehbewegung überlagert. Der Bearbeitungsablauf erfolgt auf gleiche Weise, wie es anhand der vorigen Ausführungsform beschrieben worden ist. Da die Achsen der zu bearbeitenden Hub- und Hauptlager 52a, 53a in der Vertikalebene 54 liegen, müssen die Schlitten 8, 9 lediglich nur in Y-Richtung und die Bearbeitungseinheiten 2, 3 in Z-Richtung in entsprechender Weise verstellt werden.

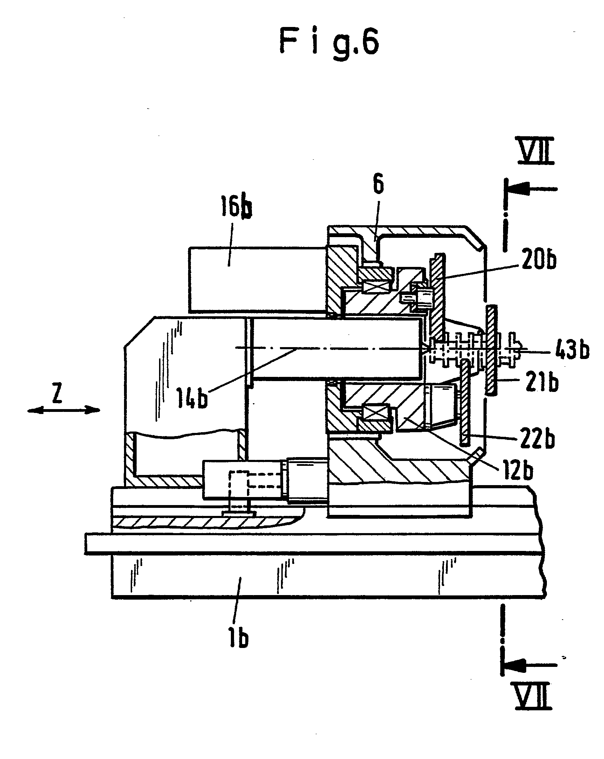

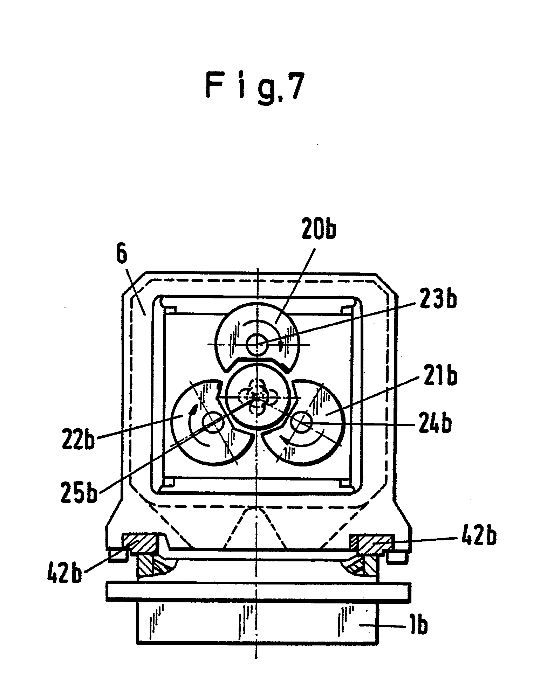

Die Ausführungsform gemäß den Fig. 6 und 7 ist zur Bearbeitung lediglich der Hauptlager einer Kurbelwelle vorgesehen. Da die Achsen der Hauptlager der Kurbelwelle in einer gemeinsamen Achse liegen, können ihre Hauptlager gleichzeitig bearbeitet werden. Aus diesem Grunde sind die Räumwerkzeuge 20b bis 22b dieser Vorrichtung im Gegensatz zu den zuvor beschriebenen Ausführungsbeispielen in verschiedenen Ebenen angeordnet (Fig. 6). Wie Fig. 7 zeigt, sind die Achsen 23b bis 25b der Räumwerkzeuge 20b bis 22b, in Achsrichtung gesehen, ebenso wie bei den vorhergehenden Ausführungsformen in den Spitzen eines gedachten Dreieckes angeordnet. Der Werkzeugträger 12b wird mittels des Antriebes 16b um seine Achse 14b drehbar angetrieben. Hierbei werden die auf dem Werkzeugträger 12b sitzenden Räumwerkzeuge 20b bis 22b, wie bereits beschrieben, mitgenommen. Dieser Umlaufbewegung der Räumwerkzeuge wird wiederum eine Drehbewegung überlagert. Der axiale Abstand zwischen den Räumwerkzeugen 20b bis 22b ist so gewählt, daß sie gleichzeitig drei Hauptlager der Kurbelwelle bearbeiten können. Bei dieser Vorrichtung ist nur eine Verstellung in Z-Richtung vorgesehen, indem der Ständer 6 auf den Führungen 42b des Bettes 1b verschiebbar ist. Im übrigen entspricht diese Ausführungsform dem Ausführungsbeispiel nach den Fig. 1 bis 3. In Fig. 6 ist wiederum nur die eine der beiden Bearbeitungseinheiten dargestellt.

Bei sämtlichen Ausführungsformen bestimmt der Umlauf der Räumwerkzeuge um die Achse des Werkzeugträgers die Schnittgeschwindigkeit, während durch Drehen der Räumwerkzeuge um ihre Achsen während des Umlaufes der Vorschub bestimmt wird. Bei den beschriebenen und dargestellten Ausführungsformen sind jeweils zwei Bearbeitungseinheiten vorgesehen, so daß die eingespannten Kurbelwellen von beiden Enden aus gleichzeitig bearbeitet werden können. Es ist auch möglich, nur eine Bearbeitungseinheit vorzusehen und dieser Bearbeitungseinheit gegenüberliegend lediglich einen Spannstock vorzusehen, damit die Kurbelwelle an beiden Enden eingespannt werden kann. In diesem Falle wird die stillstehende Kurbelwelle nur von einem Ende aus bearbeitet.

Mit den beschriebenen Vorrichtungen können auch die Seitenwangen der Kurbelwellen bearbeitet werden. Hierbei erfolgt der Werkstückabtrag von radial außen nach radial innen. Auch in diesem Fall wird also eine zylindrische Fläche bearbeitet.

Anstelle der Kurbelwellen können auch andere Werkstücke mit den Vorrichtungen bearbeitet werden, sofern die Werkstücke eine zylindrische, zu bearbeitende Fläche aufweisen.

**Patentansprüche**

1. Vorrichtung zum Räumen von zylindrischen Flächen eines Werkstückes, vorzugsweise von Lagerzapfen, insbesondere einer Kurbelwelle, mit mindestens einer Spanneinrichtung für das zu bearbeitende Werkstück und mit mindestens einem Räumwerkzeug, das auf einem Werkzeugträger relativ zur zylindrischen Fläche des Werkstückes um eine Achse drehangetrieben angeordnet ist, dadurch gekennzeichnet, daß der Werkzeugträger (12, 13; 12b) zur Erzeugung der Schnittgeschwindigkeit um die Achse der zylindrischen Fläche des stillstehend eingespannten Werkstückes (43, 43a, 43b) drehbar gelagert ist, und daß dieser Umlaufbewegung die Drehbewegung des Räumwerkzeuges (20 bis 22; 20b bis 22b) um seine eigene Achse (23 bis 25; 23b bis 25b) überlagert ist.

2. Vorrichtung nach Anspruch 1, dadurch gekennzeichnet, daß der Werkzeugträger (12, 13; 12b) als Hohlträger ausgebildet ist, durch den die Spanneinrichtung (38, 39) ragt.

3. Vorrichtung nach Anspruch 1 oder 2, dadurch gekennzeichnet, daß der Drehantrieb (26) des Räumwerkzeuges (20 bis 22; 20b bis 22b) über ein Überlagerungsgetriebe (27) mit einer Antriebswelle (37) des Räumwerkzeuges (20 bis 22, 20b bis 22b) antriebsverbunden ist.

4. Vorrichtung nach einem der Ansprüche 1 bis 3, die mehrere Räumwerkzeuge aufweist, dadurch gekennzeichnet, daß die Räumwerkzeuge (20 bis 22; 20b bis 22b) um die Achse (14, 15; 14b) des Werkzeugträgers (12, 13; 12b) verteilt angeordnet sind.

5. Vorrichtung nach Anspruch 3 oder 4, dadurch gekennzeichnet, daß der Drehantrieb (26) allen Räumwerkzeugen (20 bis 22; 20b bis 22b) gemeinsam ist.

6. Vorrichtung nach einem der Ansprüche 4 oder 5, dadurch gekennzeichnet, daß die Räumwerkzeuge (20 bis 22) in einer gemeinsamen Ebene liegen.

7. Vorrichtung nach Anspruch 4 oder 5, dadurch gekennzeichnet, daß die Räumwerkzeuge (20b bis 22b) in verschiedenen Ebenen liegen.

8. Vorrichtung nach einem der Ansprüche 1 bis 7, deren Räumwerkzeuge scheibenförmige Grundform haben, dadurch gekennzeichnet, daß die Räumwerkzeuge jeweils mit einer segmentförmigen, bis zum Umfang reichenden Aussparung (46) versehen sind, die in einer Ausgangsstellung der Räumwerkzeuge (20 bis 22; 20b bis 22b) eine zentrale Öffnung (51) bilden, deren lichte Weite größer ist als der wirksame Durchmesser des Werkstückes (43, 43a, 43b).

**Claims**

1. Apparatus for broaching cylindrical surfaces of a workpiece, preferably journals, in particular of a crankshaft, with at least one clamping device for the workpiece to be machined and with at least one broaching tool, which is arranged on a tool carrier and driven to rotate about an axis relative to the cylindrical surface of the workpiece, characterised in that for producing the cutting speed the tool carrier (12, 13; 12b) is mounted to rotate about the axis of the cylindrical surface of the workpiece (43, 43a, 43b) clamped in a stationary manner and that the rotary movement of the broaching tool (20 to 22; 20b to 22b) about its own axis (23 to 25; 23b to 25b) is superimposed on this revolving movement.

2. Apparatus according to Claim 1, characterised in that the tool carrier (12, 13; 12b) is constructed as a hollow carrier, through which the clamping device (38, 39) projects.

3. Apparatus according to Claim 1 or 2, characterised in that the rotary drive (26) of the broaching tool (20 to 22; 20b to 22b) has a driving connection by way of a superimposing transmission (27) to a drive shaft (37) of the broaching tool (20 to 22, 20b to 22b).

4. Apparatus according to one of Claims 1 to 3, which comprises several broaching tools, characterised in that the broaching tools (20 to 22; 20b to 22b) are distributed about the axis (14, 15; 14b) of the tool carrier (12, 13; 12b).

5. Apparatus according to Claim 3 or 4, characterised in that the rotary drive (26) is common to all the broaching tools (20 to 22; 20b to 22b).

6. Apparatus according to one of Claims 4 or 5, characterised in that the broaching tools (20 to 22) lie in a common plane.

7. Apparatus according to Claim 4 or 5, characterised in that the broaching tools (20b to 22b) lie in different planes.

8. Apparatus according to one of Claims 1 to 7, whereof the broaching tools have a disc-shaped basic form, characterised in that the broaching tools are each provided with a segmental recess (46) extending as far as the periphery, which recesses in an initial position of the broaching tools (20 to 22; 20b to 22b) form a central opening (51), whereof the inside width is greater than the effective diameter of the workpiece (43, 43a, 43b).

**Revendications**

1. Dispositif pour le brochage de surfaces cylindriques d'une pièce à usiner, de préférence d'un arbre, d'un arbre coudé notamment, avec un dispositif de serrage au moins pour la pièce à usiner, et avec un outil de brochage au moins, monté sur un porte-outil et entraîné en rotation autour d'un axe, par rapport à la surface cylindrique, caractérisé en ce que le porte-outil (12, 13; 12b) est monté avec une possibilité de rotation autour de l'axe de la surface cylindrique de la pièce fixée (43, 43a, 43b), immobile, en vue de produire la vitesse de coupe, et en ce que la rotation de l'outil de brochage (20 à 22; 20b à 22b) autour de son propre axe (23 à 25; 23b à 25b) se superpose à cette révolution.

2. Dispositif suivant la revendication 1, caractérisé en ce que le porte-outil (12, 13; 12b) est réalisé sous forme de support creux, au travers duquel pénètre le dispositif de serrage (38, 39).

3. Dispositif suivant l'une des revendications 1 et 2, caractérisé en ce que la commande de rotation (26) de l'outil de brochage (20 à 22; 20b à 22b) est reliée à un arbre moteur (37) de l'outil (20 à 22, 20b à 22b), par l'intermédiaire d'une transmission de superposition (27).

4. Dispositif suivant l'une quelconque des revendications 1 à 3, présentant plusieurs outils de brochage, caractérisé en ce que les outils (20 à 22; 20b à 22b) sont répartis autour de l'axe (14, 15; 14b) du porte-outil (12, 13; 12b).

5. Dispositif suivant l'une des revendications 3 et 4, caractérisé en ce que la commande de rotation (26) est commune à tous les outils de brochage (20 à 22; 20b à 22b).

6. Dispositif suivant l'une des revendications 4 et 5, caractérisé en ce que les outils de brochage (20 à 22) se situent dans un plan commun.

7. Dispositif suivant l'une des revendications 4 et 5, caractérisé en ce que les outils de brochage (20b à 22b) se situent dans différents plans.

8. Dispositif suivant l'une quelconque des revendications 1 à 7, dont les outils de brochage ont une configuration en forme de disque, caractérisé en ce que les outils sont respectivement munis d'un évidement (46) en forme de segment, prolongé jusqu'au pourtour, ces évidements formant, dans une position initiale des outils de brochage (20 à 22; 20b à 22b), une ouverture centrale (51), dont le diamètre intérieur est supérieur au diamètre effectif de la pièce à usiner (43, 43a, 43b).

Fig.1

# Fig.2

# Fig.3

# Fig.4

# Fig.5

# F i g.6

# F i g. 7